# EUROPÄISCHE PATENTSCHRIFT

(11) **EP 3 134 300 B1**
(45) Veröffentlichungstag und Bekanntmachung des Hinweises auf die Patenterteilung: **22.08.2018**
(21) Anmeldenummer: 15716472.4
(22) Anmeldetag: 09.04.2015
(51) Int. Cl.: B60T 8/171, G08C 19/00

(54) **FÜR ASYNCHRONE UND SYNCHRONE DATENÜBERTRAGUNG UNIVERSELL EINSETZBARE PSI5-SCHNITTSTELLE**
PSI5 INTERFACE UNIVERSALLY USABLE FOR ASYNCHRONOUS AND SYNCHRONOUS DATA TRANSFER
INTERFACE PSI5 POLYVALENTE POUR LA TRANSMISSION ASYNCHRONE ET SYNCHRONE DE DONNÉES

(30) Priorität: 24.04.2014 DE 102014207762
(43) Veröffentlichungstag der Anmeldung: 01.03.2017
(73) Patentinhaber: Continental Teves AG & Co. oHG, 60488 Frankfurt (DE)
(72) Erfinder: DIETZ, Timo, 65239 Hochheim am Main (DE)
(86) Internationale Anmeldenummer: PCT/EP2015/057664
(87) Internationale Veröffentlichungsnummer: WO 2015/162011

(56) Entgegenhaltungen:
- US-A1- 2003 171 853
- US-A1- 2011 296 065
- US-B1- 6 590 903
- V2: "Peripheral Sensor Interface Technical Specification Page I Peripheral Sensor Interface for Automotive Applications Peripheral Sensor Interface Technical Specification Contents", , 8. Oktober 2012 (2012-10-08), XP055197813, Gefunden im Internet: URL:http://psi5.org/fileadmin/user_upload/ 01_psi5.org/04_Specification/Specification s_PDFs/psi5_spec_v2d1_base.pdf [gefunden am 2015-06-23]

## Beschreibung

Die Erfindung betrifft eine Verdrahtungseinrichtung zum Verdrahten einer elektronischen Vorrichtung, die elektronische Vorrichtung und ein Verfahren zur Herstellung der elektronischen Vorrichtung.

Aus der WO 2010 / 037 810 A1 ist ein Sensors zum Ausgeben von Messdaten basierend auf einer erfassten physikalischen Größe bekannt. Der Sensor überträgt die Messdaten an eine Steuereinrichtung eines Fahrzeuges.

Es ist Aufgabe der Erfindung, die Datenübertragung zu verbessern.

Die Aufgabe wird durch die Merkmale der unabhängigen Ansprüche gelöst. Bevorzugte Weiterbildungen sind Gegenstand der abhängigen Ansprüche.

Es ist bevorzugt, dass unter dem Begriff Datenrahmen ein Datenpaket verstanden wird. Dem Datenpaket ist dabei insbesondere ein definierter Speicherbereich zugeordnet, in welchen das Datenpaket geschrieben wird bzw. gespeichert wird.

Gemäß einem Aspekt der Erfindung wird in einem Verfahren zum Versenden von Messdaten mit einer multiplexfähigen Schnittstelle eines Sensors, der eingerichtet ist, die Messdaten basierend auf einer physikalischen Größe zu erzeugen, zunächst unterschieden, ob die Messdaten synchronisiert mit einem Ereignis oder asynchron gesendet werden sollen und, wenn die Messdaten synchron gesendet werden sollen mit dem Ereignis, ansonsten beliebig, die Datenrahmen gemäß einem vorbestimmten Muster mit den Messdaten gefüllt und versendet.

Dem angegebenen Verfahren liegt die Überlegung zugrunde, dass ein Multiplex-Protokoll zur zusammengefassten und simultanen Übertragung von Messdaten aus unterschiedlichen Sensoren vom Aufbau her grundsätzlich verschieden zu einem Einkanal-Protokoll ist, in dem die Messdaten aus nur aus einem einzigen Sensor übertragen werden. In einem Fahrzeug ist ein derartiges Multiplex-Protokoll beispielsweise zur Übertragung von Messdaten aus einem Inertialsensor notwendig, der bis zu sechs verschiedene Messdaten, im Einzelnen eine Wankrate, eine Nickrate, eine Gierrate, eine Längsbeschleunigung, eine Querbeschleunigung und eine Vertikalbeschleunigung ausgibt. Hingegen kann bei der Versendung von Messdaten aus einem Drehzahlsensor, der ausschließlich Drehzahlpulse ausgibt, ein Einkanal-Protokoll ausreichen. Jedoch wird der Sachverhalt schwieriger, wenn der Drehzahlsensor zu bestimmten Zeitpunkten, wie beispielsweise bei der Fahrzeugwartung, zusätzlich zu den Drehzahlpulsen auch Wartungsdaten ausgibt, weil dann wieder ein Multiplex-Protokoll zur Datenübertragung notwendig ist.

Der Hauptunterschied in dem zuvor genannten Aufbau der beiden Protokollarten liegt darin, dass bei einem Multiplex-Protokoll alle Sender, also Sensoren, bei der Datenübertragung bestimmten Regeln gehorchen müssen, damit kein Sensor gleichzeitig mit einem anderen Sensor sendet und so Messdaten verloren gehen. Hingegen sendet bei einer asynchronen, einkanaligen Verbindung immer nur ein Sensor, so dass hier keine Regeln aufgestellt sollten, weil das Warten auf eventuelle Synchronisationspulse beispielsweise zu ungewollten Bandbreiteverlusten führt. Daher unterscheidet sich die Hardware für die beiden Schnittstellen im Aufbau, so dass für beide Protokollarten ein eigener Chip bereitgestellt werden muss.

Hier greift das angegebene Verfahren mit der Überlegung an, dass der Empfänger der Messdaten im Rahmen des synchronen Multiplex-Protokolls nur die versendeten Messdaten berücksichtigt, die gemäß den oben genannten Regeln und damit dem vorbestimmten Muster für ihn bestimmt sind. Hingegen wird der Empfänger der Messdaten im Falle des asynchronen Einkanal-Protokolls alle empfangenen Messdaten berücksichtigen, unabhängig davon, ob diese gemäß bestimmten Regeln oder einem vorbestimmten Muster sensorseitig versendet wurden oder nicht. Das heißt, dass der Sensor die Messdaten auch im Einkanalfall gemäß den Regeln des Multiplex-Protokolls versenden kann, weil der Empfänger ohnehin alles berücksichtigt, was er empfängt und das vorbestimmte Muster ignoriert. Jedoch braucht der Sensor im Falle des Einkanal-Protokolls nicht auf ein Ereignis zur Synchronisation, wie beispielsweise einen Synchronisationspuls zu warten. Deshalb sollte der Sensor vorzugsweise für eine effektive Nutzung der Übertragungsbandbreite im Rahmen des asynchronen Einkanal-Protokolls die Messdaten sofort senden. Ansonsten soll der Sensor in jedem Fall die Messdaten erfindungsgemäß mit einem vorbestimmten Muster versenden, was zur synchronen Übertragung der Messdaten verwendet wird, denn der Empfänger kann diese auch im asynchronen Fall entsprechend weiterverarbeiten.

Ein derartiges Verfahren kann in einem einzigen Chip implementiert werden, wobei jedoch dann eine Entscheidungsgrundlage geschaffen werden sollte, ob die Messdaten synchron oder asynchron versendet werden sollen. Dies kann durch eine Hinterlegung eines internen Flags, durch eine externe Signalisierung, durch Erkennung der Art des die Messdaten versendenden Sensors oder in beliebig anderer Weise erfolgen.

In einer Weiterbildung des angegebenen Verfahrens wird vor dem Füllen jedes Datenrahmens mit den Messdaten geprüft, ob die Messdaten synchron oder asynchron versendet werden sollen. Auf diese Weise kann zwischen dem oben genannten Multiplex-Protokoll und dem Einkanal-Protokoll auch während des Betriebes umgeschaltet werden, wie zum Beispiel in dem oben genannten Fall, dass der Drehzahlsensor einmal Diagnosedaten mitsenden soll und ein anderes Mal nicht.

In einer anderen Weiterbildung umfasst das angegebene Verfahren den Schritt Abrufen der Messdaten aus einem Zwischenspeicher, in dem der Sensor die Messdaten nach deren Erzeugung hinterlegt. Im Rahmen des Zwischenspeichers können die Messdaten vor dem Senden gesammelt werden, so dass diese nicht sofort nach deren Entstehung versendet werden müssen. Dies ist insbesondere für die synchrone Übertragung der Messdaten von Vorteil, im Rahmen derer die Messdaten wenigstens bis zum Auftreten des nächsten Synchronisationsereignisses gesammelt werden können.

In einer besonderen Weiterbildung des angegebenen Verfahrens umfasst der Zwischenspeicher wenigstens zwei Speicherbereiche, von denen wenigstens einer zum Hinterlegen der Messdaten verwendet wird. Im anderen Speicherbereich können dann Daten hinterlegt, die von den zu versendenden Daten unabhängig sind. Dies können beispielsweise Messdaten, die basierend auf einer anderen physikalischen Größe erzeugt wurden oder Diagnosedaten sein, die beispielsweise den Funktionszustand des Sensors beschreiben können. Aus einem derartigen Zwischenspeicher mit den verschiedenen Speicherbereichen können die zu versendenden, die Messdaten umfassenden Daten in einfacher Weise gesammelt und zum Versenden vorbereitet werden.

In einer bevorzugten Weiterbildung des angegebenen Verfahrens wird wenigstens ein weiterer der Speicherbereiche zum Hinterlegen von Diagnosedaten verwendet. Diese können dann zu Wartungszwecken oder im Fehlerfall des Sensors abgerufen und an die Empfängereinrichtung, die beispielsweise eine Steuereinrichtung ist, versendet werden.

In einer noch anderen Weiterbildung des angegebenen Verfahrens sind die Datenrahmen in wenigstens zwei Zeitschlitze unterteilt, wobei den Messdaten zum Senden wenigstens einer der Zeitschlitze zugeteilt ist zum Füllen der Datenrahmen gemäß dem vorbestimmten Muster die Messdaten in die zugeteilten Zeitschlitze gefüllt werden. Mit den Zeitschlitzen können in einfacher Weise verschiedene Kanäle simuliert in die die verschiedenen Arten von zu übertragenen Daten gefüllt werden können. Wird hingegen asynchron übertragen kann einfach jeder Zeitschlitz jedes Datenrahmens mit den Messdaten, die eine Art der zu übertragenden Daten sind, gefüllt und versendet werden.

In einer zusätzlichen Weiterbildung umfasst das angegebene Verfahren den Schritt Verzögern des Füllens des Datenrahmens um wenigstens einen Zeitschlitz nach dem Ereignis, wenn die Messdaten synchron gesendet und der wenigstens eine übersprungene Zeitschlitz für andere zu übertragende Daten freigehalten werden sollen. Auf diese Weise können Zeitschlitze übersprungen werden, die für andere Daten bereits reserviert oder vorgesehen sind.

Gemäß einem weiteren Aspekt der Erfindung ist eine Datenschnittstelle für einen Sensor, die multiplexfähig und eingerichtet, eines der angegebenen Verfahren durchzuführen.

In einer Weiterbildung des angegebenen Verfahrens ist die angegebene Datenschnittstelle eine Peripheral Sensor Interface 5 - Schnittstelle, PSI5-Schnittstelle genannt. Eine PSI5-Schnittstelle basiert auf einer Zweidrahtleitung und wird in der Automobilelektronik zum Anschluss ausgelagerter Sensoren an elektronische Steuergeräte eingesetzt. Da eine PSI5-Schnittstelle Punkt-zu-Punkt- und Buskonfigurationen mit asynchroner und synchroner Kommunikation unterstützt, lässt sich das angegebene Verfahren im Rahmen einer derartigen Schnittstelle besonders einfach technisch umsetzen.

Gemäß einem weiteren Aspekt der Erfindung umfasst ein Sensor einen Messaufnehmer, der eingerichtet ist, basierend auf einer physikalischen Größe Messdaten zu generieren, und eine der angegebenen multiplexfähigen Datenschnittstellen zum Versenden der Messdaten.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Darstellung eines Inertialsensors für die Fahrdynamikregelung,
Fig. 3 eine schematische Darstellung eines vom Inertialsensor sendbaren Datenrahmens,
Fig. 4 eine schematische Darstellung eines alternativen vom Inertialsensor sendbaren Datenrahmens,
Fig. 5 eine schematische Darstellung eines noch alternativen vom Inertialsensor sendbaren Datenrahmens,
Fig. 6 ein Ablaufdiagramm eines Programms, das zum Senden eines Datenrahmens der Fig. 3 bis 5 durführbar ist, und
Fig. 7 ein Ablaufdiagramm eines alternativen Programms, das zum Senden eines Datenrahmens der Fig. 3 bis 5 durführbar ist. In den Figuren werden gleiche technische Elemente mit gleichen Bezugszeichen versehen und nur einmal beschrieben.

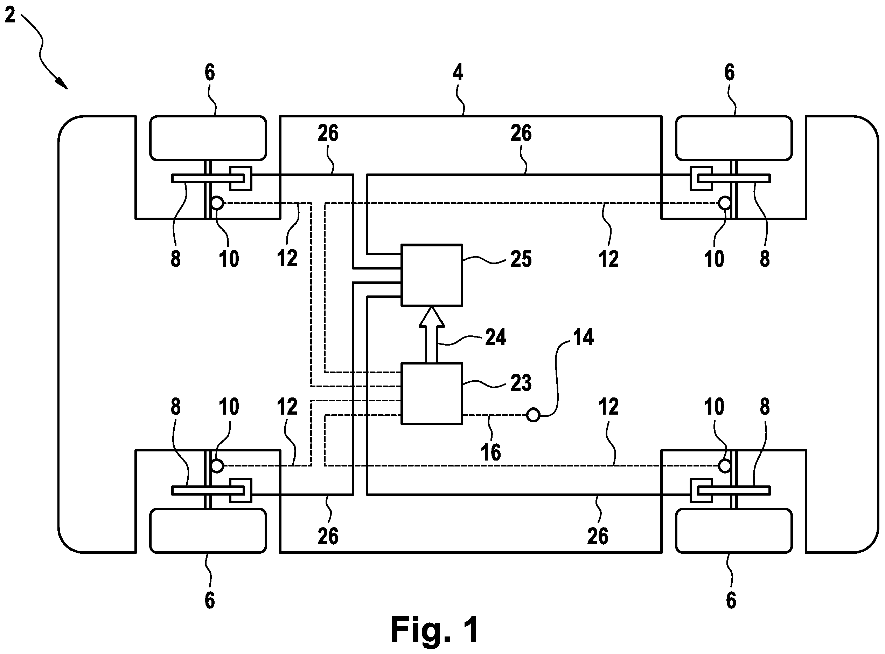

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass das die Räder 6 des Fahrzeugs 2 ihre Bodenhaftung verlieren und sich das Fahrzeug 2 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden. In derartigen Regelkreisen werden durch Sensoren Messdaten erfasst. Regler vergleichen die Messdaten dann mit Solldaten und führen die Messdaten mittels Stellgliedern an die Solldaten heran.

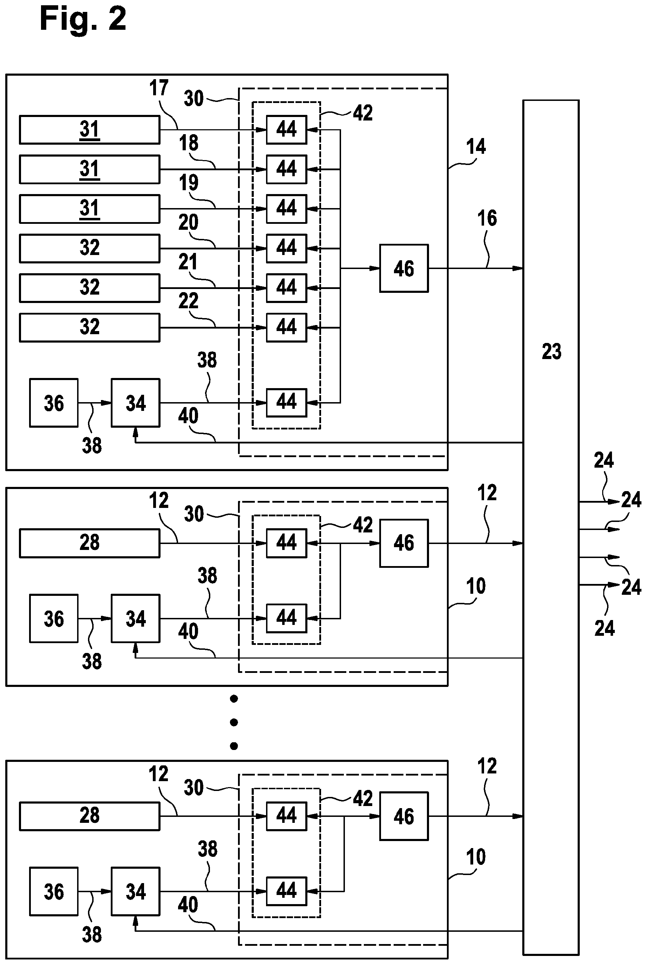

In der vorliegenden Ausführung weist das Fahrzeug 2 als Sensoren Drehzahlsensoren 10 an den Rädern 6 auf, die als Messdaten jeweils eine Drehzahl 12 der Räder 6 erfassen. Ferner weist das Fahrzeug 2 als Sensor einen Inertialsensor 14 auf, der als Messdaten Fahrdynamikdaten 16 des Fahrzeuges 2 erfasst aus denen beispielsweise eine Nickrate 17, eine Wankrate 18, eine Gierrate 19, eine Querbeschleunigung 20, eine Längsbeschleunigung 21 und/oder eine Vertikalbeschleunigung 22 in einer dem Fachmann an sich bekannten Weise ausgegeben werden kann. Diese Messdaten sind in Fig. 2 im Einzelnen angedeutet.

Basierend auf den erfassten Drehzahlen 12 und Fahrdynamikdaten 16 kann ein Regler 23 in einer dem Fachmann bekannten Weise bestimmen, ob das Fahrzeug 2 auf der Fahrbahn rutscht oder sogar von der oben genannten vorgegebenen Trajektorie abweicht und entsprechen mit einem an sich bekannten Reglerausgangssignal 24 darauf reagieren. Das Reglerausgangssignal 24 kann dann von einer Stelleinrichtung 25 verwendet werden, um mittels Stellsignalen 26 Stellglieder, wie die Bremsen 8 anzusteuern, die auf das Rutschen und die Abweichung von der vorgegebenen Trajektorie in an sich bekannter Weise reagieren.

Der Regler 18 kann beispielsweise in eine an sich bekannte Motorsteuerung des Fahrzeuges 2 integriert sein. Auch können der Regler 18 und die Stelleinrichtung 25 als eine gemeinsame Regeleinrichtung ausgebildet und optional in die zuvor genannte Motorsteuerung integriert sein.

Anhand von Fig. 2 soll die Übertragung der Messdaten 12, 16 von den Sensoren 10, 14 zum Regler 23 näher erläutert werden.

Der Einfachheit halber sind in Fig. 2 von den vier Drehzahlsensoren 10 nur zwei schematisch dargestellt. Die restlichen Drehzahlsensoren 10 sind durch Auslassungspunkte angedeutet. Jeder der Drehzahlsensoren 10 kann beliebig aufgebaut sein, solange sein Ausgangssignal von der zu erfassenden Drehzahl 12 seines Rades 6 abhängig ist. Die Drehzahlsensoren 10 können als aktive Drehzahlsensoren aufgebaut sein, die je einen magnetostriktiven Messaufnehmer 28 umfassen. Details hierzu können beispielsweise der DE 101 46 949 A1 entnommen werden. Die mit den Messaufnehmern 28 erfassten Drehzahlen 12 werden anschließend an eine Datenschnittstelle 30 ausgegeben, die diese dann in einer noch zu beschreibenden Weise als Messdaten an den Regler 23 überträgt.

Auch der Inertialsensor 14 kann beliebig aufgebaut sein. Im Rahmen der vorliegenden Ausführung soll der Inertialsensor 14 die obengenannten Fahrdynamikdaten 16 ausgeben. Im Rahmen spezieller Anwendungen können aber auch einzelne der Fahrdynamikdaten 16 auch weggelassen werden. So ist bei der oben genannten Fahrdynamikregelung beispielsweise die Vertikalbeschleunigung 22 irrelevant. Der Inertialsensor 14 kann für die Nickrate 17, für die Wankrate 18 und für die Gierrate 19 je einen Drehratenmessaufnehmer 31 und für die Querbeschleunigung 20, für die Längsbeschleunigung 21 und für die Vertikalbeschleunigung 22 je einen Beschleunigungsmessaufnehmer 32 umfassen, wie er beispielsweise in der DE 10 2009 019 318 A1 offenbart ist. Die einzelnen erfassten Fahrdynamikdaten 16 werden dann an eine Datenschnittstelle 30, die die Fahrdynamikdaten 16 dann in der noch zu beschreibenden Weise an den Regler 23 überträgt.

In jedem der Sensoren 10, 14 kann zusätzlich noch eine Diagnoseeinrichtung 34 angeordnet sein. Diese kann an einen Fehlerspeicher 36 angeschlossen sein, der in an sich bekannter Weise mit Fehlerdaten 38 beschrieben ist, die Fehlerzustände des jeweiligen Sensors 10, 14 beschreiben, wobei der Fehlerspeicher 36 auf Anforderung auslesbar ist. So kann der Regler 23 den jeweiligen Sensor 10, 14 mit einer Diagnoseanforderung 40 auffordern, die Fehlerdaten 38 zu übertragen. Dann soll die Diagnoseeinrichtung 34 die Fehlerdaten 38 auslesen und entsprechend an die Datenschnittstelle 30 zu Übertragung zum Regler 23 ausgeben. Das Auslesen der Fehlerdaten 38 kann beispielsweise zu Wartungszwecken oder zur Fehleranalyse erfolgen.

Die Datenschnittstelle 30 in jedem Sensor 10, 12 ist im Rahmen der vorliegenden Ausführung als PSI5-Schnittstelle ausgeführt und umfasst einen Zwischenspeicher 42 mit mehreren Speicherbereichen 44 und einen Signalprozessor 46. PSI5 ist ein Standard für Schnittstellen, die auf Zweidrahtleitungen basieren und in der Automobilelektronik zum Anschluss ausgelagerter Sensoren an elektronische Steuergeräte eingesetzt werden. Im Rahmen des PSI5-Standards ist sowohl die Einkanal- als auch die asynchrone und synchrone Buskommunikation geregelt.

Nachstehend soll unter einer einkanaligen Kommunikation eine Datenübertragung zwischen einer der Datenschnittstellen 30 und dem Regler 23 verstanden werden, bei der nur eine einzige Art Messdaten, also beispielsweise Drehzahlen 12 zu einem Rad 6 oder die Gierraten 19 des Fahrzeuges 2 übertragen werden. Weil im Rahmen des PSI5-Standards die Messdaten über eine einzige Zweidrahtleitung verschickt werden, so dass nur ein physischer Datenkanal vorhanden ist, setzt eine mehrkanalige Kommunikation voraus, dass die verschiedene Arten von Messdaten auf mehrere logische Datenkanäle in dem einzigen physischen Datenkanal gemultiplext werden. Die Steuerung des einkanaligen beziehungsweise mehrkanaligen Versendens der Messdaten übernimmt im Rahmen der vorliegenden Ausführung ein entsprechender Signalprozessor 46. Der Ablauf des einkanaligen Versendes von Messdaten unterscheidet sich jedoch grundlegend vom mehrkanaligen Versenden von Messdaten. Deshalb unterscheiden sich auch die entsprechenden Signalprozessoren 46 und damit die entsprechenden Datenschnittstellen 30. Das heißt, dass sich die Datenschnittstelle 30 für den Inertialsensor 14, der verschiedene Arten von Messdaten, i.e. die verschiedenen Arten an Fahrdynamikdaten 16 ausgibt, von der Datenschnittstelle 30 für einen der Drehzahlsensoren 10 unterscheiden würde.

Dies treibt jedoch die Herstellungskosten in die Höhe, weil für jeden Sensor ein eigener Signalprozessor 46 hergestellt werden muss. Besser wäre es, den Signalprozessor 46 für jeden Sensor 10, 14 einheitlich herzustellen. Um im Inertialsensor 14 den gleichen Signalprozessor 46 zu verwenden, wie in den Drehzahlsensoren 10 und damit die Herstellungskosten zu senken, wird im Rahmen der vorliegenden Ausführung vorgeschlagen, Messdaten, die eigentlich einkanalig übertragen werden können virtuell zu multiplexen. Das heißt, dass im Falle einer einkanaligen Datenübertragung und im Falle einer mehrkanaligen Datenübertragung das gleiche Muster zum Versenden der Messdaten verwendet wird. Da der Regler 23 ohnehin beide Formen der Datenübertragung verstehen muss, muss am Regler 23, und damit am Empfänger, für das virtuelle multiplexen von Messdaten, die einkanalig übertragen werden nichts weiter technisch verändert werden. Im Gegenteil, gegebenenfalls kann der Regler 23 sogar weiter vereinfacht werden.

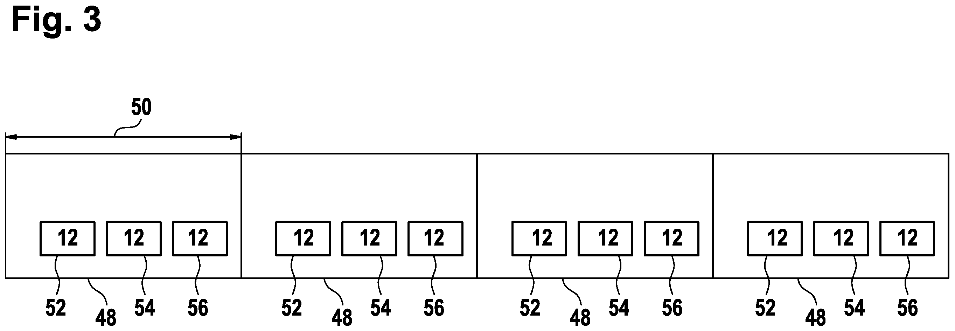

Das Muster zum Multiplexen der Messdaten im Rahmen des PSI5 Standards soll nachstehend anhand der Fig. 3 bis 5 erläutert werden.

Zur Übertragung der Messdaten, also der Drehzahlen 12 aus einem der Drehzahlsensoren 10 oder der Fahrdynamikdaten 16 aus dem Inertialsensor 14 werden zeitlich aufeinanderfolgende Datenrahmen 48 mit einer Rahmenzeitdauer 50 gebildet. Dabei sind die einzelnen Datenrahmen 48 in nicht einschränkender Weise in einen ersten Zeitschlitz 52, einen zweiten Zeitschlitz 54 und einen dritten Zeitschlitz 56 unterteilt. Innerhalb eines jeden der Zeitschlitze 52 bis 56 können Messdaten von einem der Sensoren 10, 14 an den Regler 23 übertragen werden.

Solange wie in Fig. 3 gezeigt nur eine Art von Messdaten, also beispielsweise die Drehzahlen 12 einkanalig übertragen wird, kann die die Messdaten versendende Datenschnittstelle 30 die einzelnen Zeitschlitze 52 bis 56 jedes Datenrahmens 48 nacheinander mit den Messdaten, also mit den Drehzahlen 12 füllen und an den Regler 23 versenden. Weitere technische Vorkehrungen vor dem Versenden brauchen nicht beachtet zu werden.

Der Regler 23 empfängt die in den Zeitschlitzen 52 bis 56 versendeten Messdaten in einer entsprechend zeitlichen Reihenfolge und kann diese dann weiterarbeiten.

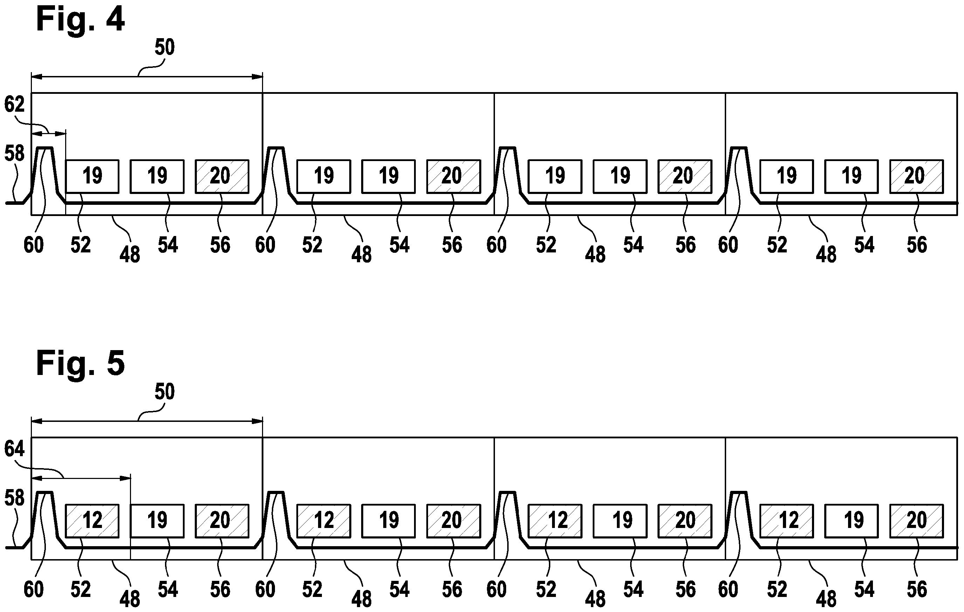

Im Rahmen der Fig. 4 kann der Regler 23 ein Synchronisationssignal 58 aussenden, um die Übertragung der Messdaten von den einzelnen Sensoren zu steuern. Das Synchronisationssignal 58 umfasst Synchronisationspulse 60, mit denen der Beginn der einzelnen Datenrahmen 48 durch den Regler 23 vorgegeben wird. Im Rahmen der Fig. 4 soll angenommen werden, dass der Inertialsensor 14 die Datenrahmen 48 mit den Fahrdynmikdaten Gierrate 19 und Querbeschleunigung 20 füllen soll. Dabei soll die Gierrate 19 im ersten Zeitschlitz 19 und im zweiten Zeitschlitz 54 übertragen werden. Der erste Zeitschlitz weist gegenüber dem Synchronisationspuls 60 eine erste zeitliche Verzögerung 62 auf. Daher wartet der Inertialsensor 14 nach dem Detektieren des Synchronisationspulses 60 die erste zeitliche Verzögerung 62 ab und füllt dann den ersten und zweiten Zeitschlitz 52, 54 mit der Gierrate 19. Im Anschluss kann der Inertialsensor 14 in den dritten Zeitschlitz 56 die Querbeschleunigung 20 füllen.

Dieses Procedere wird dann für jeden Datenrahmen 48 wiederholt. Im Rahmen der Fig. 5 soll in etwas unrealistischer Weise angenommen werden, dass der erste Zeitschlitz 52 für einen der Drehzahlsensoren 10 reserviert ist, der dann innerhalb des ersten Zeitschlitzes 52 die Drehzahl 12 an den Regler 23 überträgt. Dies ist deshalb unrealistisch, weil die Drehzahlsensoren 10 die Drehzahlen 12 in Form von kontinuierlichen Drehzahlpulsen übertragen. Jeder Drehzahlsensor 10 wird daher seine gemessene Drehzahl 12 wie in Fig. 3 gezeigt an den Regler 23 übertragen. Um jedoch das Prinzip mehrerer an den Regler 23 angeschlossener Sender besser zu verstehen, soll dieses Szenario der Einfachheit halber angenommen werden.

Der Drehzahlsensor 10 füllt den ersten Zeitschlitz 52 jedes Datenrahmens 48 in der im Rahmen der in Fig. 4 erläuterten Weise. Dabei stoppt er jedoch die Befüllung der Zeitschlitze nach dem ersten Zeitschlitz 52.

Der Inertialensor 14 hingegen wartet vor dem Befüllen eine zweite zeitliche Verzögerung 64 ab. Diese dauert solange, wie der zweite Zeitschlitz 54 zeitlich vom Synchronisationspuls 60 beabstandet ist. Danach füllt er den zweiten Zeitschlitz 54 mit der Gierrate 19 und den dritten Zeitschlitz 56 mit der Querbeschleunigung in der im Rahmen der Fig. 4 erläuterten Weise.

Durch die im Rahmen der Fig. 5 erläutert Verwendung der einzelnen Datenrahmen 48 können daher verschiedene Sender Messdaten an den Regler übertragen.

Neben den Messdaten können die einzelnen Zeitschlitze 52, 54, 56 auch mit anderen Daten, wie beispielsweise den Fehlerdaten 38 befüllt werden. Wenn beispielsweise im Rahmen der Fig. 4 an den Inertialsensor 14 eine Diagnoseanforderung 40 gesendet wird, dann könnte der Inertialsensor 14 beispielsweise in einer beiden Zeitschlitze 52, 54 statt der Gierrate 19 die Fehlerdaten 38 übertragen.

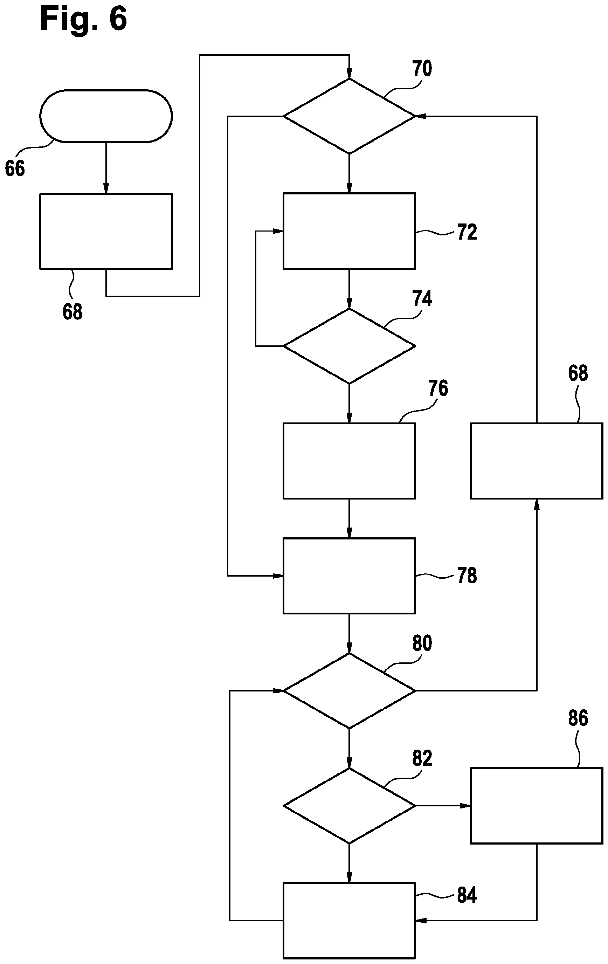

Nachstehend soll anhand der Fig. 6 ein Verfahren erläutert werden, mit dem die in den Fig. 3 bis 5 gezeigten Datenrahmen 48 zur Übertragung von Messdaten erzeugt werden können. Alternativ oder zusätzlich könnten natürlich auch die Fehlerdaten 38 übertragen werden.

Das Verfahren wird durch den Signalprozessor 46 ausgeführt beginnt mit einem Startzustand 66, der nicht näher definiert werden braucht.

Danach werden in einem Initialisierungsschritt 68 alle Variablen auf einen bestimmten Wert gesetzt wie beispielsweise Null, die die Abfrage der zu übertragenden Variablen dienen. Diese Variablen umfassen beispielsweise Zeiger, die auf die auf die zu übertragenden Messdaten und zeigen und Variablen, die die Datenrahmen 48 beschreiben, das heißt Laufnummern der Datenrahmen und so weiter.

Im Anschluss wird mit einem Abfrageschritt 70 geprüft, ob die zu übertragenden Messdaten synchron mit dem Synchronisationssignal 58 oder nicht übertragen werden sollen. Wenn die Messdaten mit dem Synchronisationssignal 58 übertragen werden sollen, dann folgt ein Programmabschnitt zur Synchronisation. Ansonsten wird dieser Programmabschnitt übersprungen.

Der Programmabschnitt zur Synchronisation beginnt in Schritt 72 mit einem Warteschritt 74, der von einem Abfrageschritt 70 solange angesteuert wird, solange kein Synchronisationspuls 60 detektiert wurde. Nach der Detektion des Synchronisationspulses 60 erfolgt dann im Rahmen eines Verzögerungsschrittes 76 noch eine Verzögerung um eine vorgegebene zeitliche Verzögerung, die beispielsweise eine der oben genannten zeitlichen Verzögerungen 62, 64 sein kann. Damit ist der Programmabschnitt zur Synchronisation beendet.

An den Programmabschnitt zur Synchronisation schließt sich ein Programmabschnitt zur Formung der Datenrahmen 48 an. Dazu wird zunächst in einem weiteren Initialisierungsschritt 78 ein Hilfszähler auf einen vorbestimmten Wert. Dieser Hilfszähler wird dazu verwendet, die Zeitschlitze 52, 54, 56 pro Datenrahmen 48 zu zählen.

Danach wird mit der Beschreibung des Datenrahmens 48 mit den zu übertragenden Messdaten begonnen.

Dazu wird zunächst in einem Entscheidungsschritt 80 anhand des Hilfszählers überprüft, ob die maximal zulässige Anzahl an beschreibbaren Zeitschlitzen 52, 54, 56 erreicht ist. Dürfen beispielsweise wie in Fig. 4 zur Übertragung der Gierrate 19 nur zwei Zeitschlitze beschrieben werden, so wäre diese maximale zulässige Anzahl zwei. Ist die maximal zulässige Anzahl an beschreibbaren Zeitschlitzen 52, 54, 56 überschritten, so wird mit der Beschreibung eines neuen Datenrahmens 48 begonnen und zum Entscheidungsschritt 70 zurückgekehrt, in dem gegebenenfalls erneut in den Programmabschnitt zur Synchronisation eingetreten wird.

Anderenfalls führt der Entscheidungsschritt 80 zu einem weiteren Entscheidungsschritt 82, im Rahmen dessen abgeprüft wird, ob der entsprechende Speicherbereich 44 des Zwischenspeichers 42 für die zu übertragenden Messdaten vollständig ausgelesen wurde. Dies kann beispielsweise dadurch erreicht werden, dass geprüft wird, ob der Wert des Zeigers, der auf den Speicherbereich mit den zu übertragenden Messdaten zeigt, einen vorbestimmten Maximalwert erreicht hat.

Ergibt der weitere Entscheidungsschritt 82, dass noch nicht alle zu übertragenden Messdaten übertragenden Messdaten übertragen sind, dann werden in einem Übertragungsschritt 84 die aktuell zu übertragenden Messdaten übertragen. Anderenfalls wird vorher in einem Reset-Schritt 86 sichergestellt, dass zu übertragende Messdaten ausgelesen werden können. Dies kann beispielsweise dadurch geschehen, dass der Wert des Zeigers, der auf den Speicherbereich mit den Messdaten zeigt, zurückgesetzt wird.

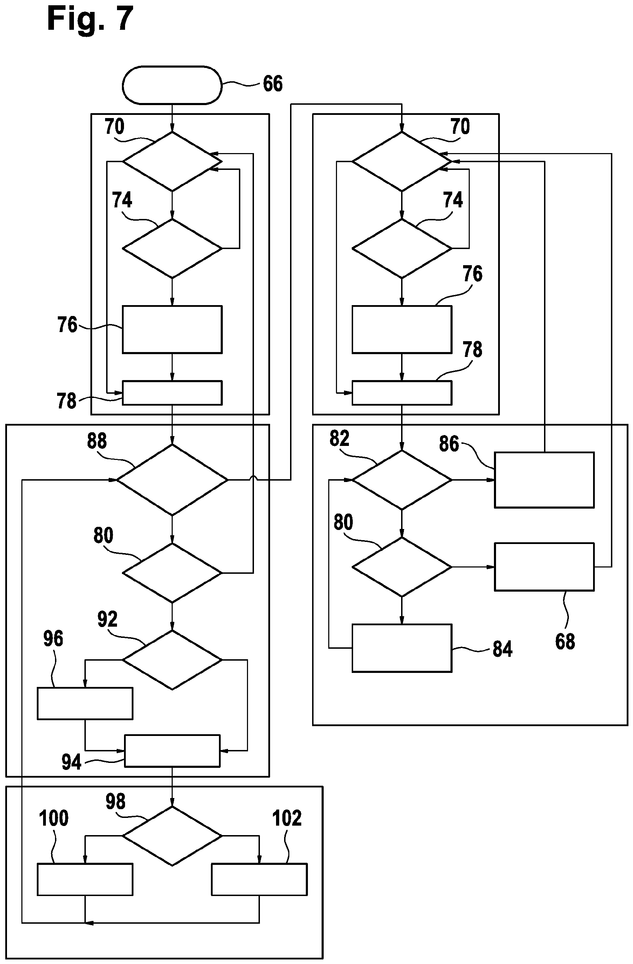

Nachstehend wird anhand von Fig. 7 eine Weiterbildung des zuvor erläuterten Verfahrens beschrieben. Auch dieses Verfahren wird wieder vom Signalprozessor 46 durchgeführt.

Das Befüllen der Datenrahmen 48 mit den Messdaten läuft im Wesentlichen gleich zum Verfahren der Fig. 6 ab. Es wurden lediglich einige Schritte vertauscht, um zu verdeutlichen, dass die Schritte nicht zwingend in der in Fig. 6 gezeigten Reihenfolge ausgeführt werden müssen.

Hinzu kommt im Rahmen der vorliegenden Ausführung ein Programmabschnitt zur Initialisierung. Im Rahmen des oben genannten PSI5 Protokolls wird eine derartige Initialisierung zur Identifikation des Sensors nach jedem Kaltstart oder Neustart durchgeführt.

Hierzu wird zunächst im Rahmen eines Entscheidungsschrittes 88 geprüft, ob alle Initialisierungsdaten gesendet wurden. Danach wird im Rahmen des bereits erläuterten Entscheidungsschrittes 80 geprüft, ob im aktuell zu befüllenden Datenrahmen 48 der letzte Zeitschlitz 56 erreicht ist. In diesem Fall wird auf den Beginn eines neuen Datenrahmens 48 gewartet. Anderenfalls wird im Rahmen eines weiteren Entscheidungsschrittes 90 geprüft, ob zu einer bestimmten Identifikation alle Identifikationsdaten, im Rahmen des PSI5 Protokolls also ID-Nummer und ID-Datum, gesendet wurden. Wenn nicht, dann wird im nächsten Schritt 92 der nächste Zeitschlitz 52, 54, 56 im aktuellen Datenrahmen 48 ausgewählt. Anderenfalls werden in einem Auswahlschritt 96 zunächst die nächsten Identifikationsdaten ausgewählt. Abschließend wird in einem weiteren Entscheidungsschritt 98 entschieden ob eine ID-Nummer oder ein ID-Datum, also eine Information zu der ID-Nummer, gesendet wird. Entsprechend wird dann in einem ersten Sendeschritt 100 die ID-Nummer oder in einem zweiten Sendeschritt 102 das ID-Datum gesendet.

Die Verfahren der Fig. 6 und 7 können dabei auch miteinander kombiniert werden.

## Patentansprüche

1. Verfahren zum Versenden von Messdaten (12, 16) mit einer multiplexfähigen Schnittstelle (30) eines Sensors (10, 14) in einem Fahrzeug (2), der eingerichtet ist, die Messdaten (12, 16) basierend auf einer physikalischen Größe zu erzeugen, in Datenrahmen (48), wobei zunächst unterschieden wird, ob die Messdaten (12, 16) synchronisiert mit einem Ereignis (60) oder asynchron gesendet werden sollen und, wenn die Messdaten (12, 16) synchron gesendet werden sollen mit dem Ereignis (60), ansonsten beliebig, die Datenrahmen (48) gemäß einem vorbestimmten Muster (52, 54, 56) mit den Messdaten (12, 16) gefüllt und versendet werden, wobei im Falle einer einkanaligen Datenübertragung und im Falle einer mehrkanaligen Datenübertragung das gleiche Muster zum Versenden der Messdaten verwendet wird.

2. Verfahren nach Anspruch 1, wobei vor dem Füllen jedes Datenrahmens (48) mit den Messdaten (12, 16) geprüft wird, ob die Messdaten (12, 16) synchron oder asynchron versendet werden sollen.

3. Verfahren nach Anspruch 1 oder 2, umfassend Abrufen der Messdaten (12, 16) aus einem Zwischenspeicher (42), in dem der Sensor (10, 14) die Messdaten (12, 16) nach deren Erzeugung hinterlegt.

4. Verfahren nach Anspruch 3, wobei der Zwischenspeicher (42) wenigstens zwei Speicherbereiche (44) umfasst, von denen wenigstens einer zum Hinterlegen der Messdaten (12, 16) verwendet wird.

5. Verfahren nach Anspruch 4, wobei wenigstens ein weiterer der Speicherbereiche (44) zum Hinterlegen von Diagnosedaten (38) verwendet wird.

6. Verfahren nach einem der vorstehenden Ansprüche, wobei die Datenrahmen (48) in wenigstens zwei Zeitschlitze (52, 54, 56) unterteilt sind und den Messdaten (12, 16) zum Senden wenigstens einer der Zeitschlitze (52, 54, 56) zugeteilt ist, und wobei zum Füllen der Datenrahmen (48) gemäß dem vorbestimmten Muster die Messdaten (12, 16) in die zugeteilten Zeitschlitze (52, 54, 56) gefüllt werden.

7. Verfahren nach Anspruch 5, umfassend Verzögern des Füllens des Datenrahmens (48) um wenigstens einen Zeitschlitz (52, 54, 56) nach dem Ereignis (60), wenn die Messdaten (12, 16) synchron gesendet und der wenigstens eine übersprungene Zeitschlitz (52, 54, 56) für andere zu übertragende Daten freigehalten werden soll.

8. Vorrichtung (46), die eingerichtet ist, ein Verfahren nach einem der vorstehenden Ansprüche durchzuführen.

9. Datenschnittstelle (30), insbesondere Peripheral Sensor Interface 5 - Schnittstelle, PSI5-Schnittstelle genannt, für einen Sensor (10, 14), die multiplexfähig ist und eine Vorrichtung nach Anspruch 8 umfasst.

10. Sensor umfassend:
- einen Messaufnehmer (31, 32), der eingerichtet ist, basierend auf einer physikalischen Größe Messdaten (12, 16) zu generieren, und
- eine multiplexfähige Datenschnittstelle (30) nach Anspruch 9, zum Versenden der Messdaten (12, 16).

## Claims

1. Method for transmitting measurement data (12, 16) using a multiplexing-capable interface (30) of a sensor (10, 14) in a vehicle (2), which sensor is set up to generate the measurement data (12, 16) on the basis of a physical variable, in data frames (48), wherein it is first of all distinguished whether the measurement data (12, 16) are intended to be transmitted in sync with an event (60) or asynchronously and, if the measurement data (12, 16) are intended to be transmitted in sync with the event (60), and otherwise in an arbitrary manner, the data frames (48) are filled with the measurement data (12, 16) according to a predetermined pattern (52, 54, 56) and are transmitted, wherein the same pattern is used to transmit the measurement data in the case of single-channel data transmission and in the case of multi-channel data transmission.

2. Method according to Claim 1, wherein, before each data frame (48) is filled with the measurement data (12, 16), a check is carried out in order to determine whether the measurement data (12, 16) are intended to be transmitted synchronously or asynchronously.

3. Method according to Claim 1 or 2, comprising retrieving the measurement data (12, 16) from a buffer (42) in which the sensor (10, 14) stores the measurement data (12, 16) after they have been generated.

4. Method according to Claim 3, wherein the buffer (42) comprises at least two memory areas (44), at least one of which is used to store the measurement data (12, 16) .

5. Method according to Claim 4, wherein at least one further of the memory areas (44) is used to store diagnostic data (38).

6. Method according to one of the preceding claims, wherein the data frames (48) are subdivided into at least two time slots (52, 54, 56) and at least one of the time slots (52, 54, 56) is allocated to the measurement data (12, 16) for transmission, and wherein, in order to fill the data frames (48) according to the predetermined pattern, the measurement data (12, 16) are filled into the allocated time slots (52, 54, 56).

7. Method according to Claim 5, comprising delaying the filling of the data frame (48) by at least one time slot (52, 54, 56) after the event (60) if the measurement data (12, 16) are intended to be transmitted synchronously and the at least one skipped time slot (52, 54, 56) is intended to be kept free for other data to be transmitted.

8. Apparatus (46) which is set up to carry out a method according to one of the preceding claims.

9. Data interface (30), in particular peripheral sensor interface 5, called PSI5 interface, for a sensor (10, 14), which interface is capable of multiplexing and comprises an apparatus according to Claim 8.

10. Sensor comprising:
- a measuring sensor (31, 32) which is set up to generate measurement data (12, 16) on the basis of a physical variable, and
- a multiplexing-capable data interface (30) according to Claim 9 for transmitting the measurement data (12, 16).

## Revendications

1. Procédé d'envoi de données de mesure (12, 16) au moyen d'une interface (30) multiplexable d'un capteur (10, 14), installé dans un véhicule (2), qui est conçu pour générer les données de mesure (12, 16) sur la base d'une grandeur physique, dans des trames de données (48), dans lequel il est tout d'abord déterminé si les données de mesure (12, 16) doivent être envoyées de manière synchrone avec un événement (60) ou de manière asynchrone et, lorsque les données de mesure (12, 16) doivent être envoyées de manière synchrone avec l'événement (60), par ailleurs quelconque, les trames de données (48) sont remplies avec les données de mesure (12, 16) selon un schéma prédéterminé (52, 54, 56) et sont envoyées, dans lequel, dans le cas d'une transmission de données monocanal et dans le cas d'une transmission de données multicanal, le même schéma est utilisé pour envoyer les données de mesure.

2. Procédé selon la revendication 1, dans lequel, avant le remplissage de chaque trame de données (48) avec les données de mesure (12, 16), il est vérifié si les données de mesure (12, 16) doivent être envoyées de manière synchrone ou asynchrone.

3. Procédé selon la revendication 1 ou 2, consistant à récupérer les données de mesure (12, 16) à partir d'une mémoire tampon (42) dans laquelle le capteur (10, 14) stocke les données de mesure (12, 16) après qu'elles ont été générées.

4. Procédé selon la revendication 3, dans lequel la mémoire tampon (42) comprend au moins deux zones de mémoire (44) dont au moins l'une est utilisée pour stocker les données de mesure.

5. Procédé selon la revendication 4, dans lequel au moins une autre des zones de mémoire (44) est utilisée pour stocker des données de diagnostic (38).

6. Procédé selon l'une des revendications précédentes, dans lequel les trames de données (48) sont réparties en au moins deux créneaux de temps (52, 54, 56) et sont affectées aux données de mesure (12, 16) pour envoyer au moins l'un des créneaux de temps (52, 54, 56) et dans lequel le remplissage par les données de mesure (12, 16) est effectué dans les créneaux de temps affectés (52, 54, 56) pour remplir les trames de données (48) conformément au schéma prédéterminé.

7. Procédé selon la revendication 5, consistant à retarder le remplissage de la trame de données (48) d'au moins un créneau de temps (52, 54, 56) après l'événement (60) lorsque les données de mesure (12, 16) doivent être envoyées de manière synchrone et lorsque l'au moins un créneau de temps (52, 54, 56) doit être maintenue libre pour d'autres données à transmettre.

8. Dispositif (46) conçu pour mettre en oeuvre un procédé selon l'une des revendications précédentes.

9. Interface de données (30), notamment interface de type Peripheral Sensor Interface 5, ou interface PSI5, destinée à un capteur (10, 14) qui est multiplexable et comprend un dispositif selon la revendication 8.

10. Capteur comprenant :
- un dispositif d'acquisition de mesure (31, 32) qui est conçu pour générer des données de mesure (12, 16) sur la base d'une grandeur physique, et
- une interface multiplexable (30) selon la revendication 9, destinée à envoyer les données de mesure (12, 16).
